Europäisches Patentamt

European Patent Office

Office européen des brevets

(11) Veröffentlichungsnummer: **0 383 993**
**A1**

(12) **EUROPÄISCHE PATENTANMELDUNG**

(21) Anmeldenummer: **89111901.8**

(22) Anmeldetag: **30.06.89**

(51) Int. Cl.5: **F16B 5/00, B21D 39/03**

(30) Priorität: **18.02.89 DE 3905056**

(43) Veröffentlichungstag der Anmeldung:
**29.08.90 Patentblatt 90/35**

(84) Benannte Vertragsstaaten:
**AT BE CH DE ES FR GB GR IT LI LU NL SE**

(71) Anmelder: **LAHNWERK GMBH + CO. KG**
**Verformungstechnik Friedensdorf**
**Wilhelmshütter Strasse 17**
**D-3563 Dautphetal(DE)**

(72) Erfinder: **Gröf, Wolfgang**
**Im Hohental 4**
**D-6349 Mittenaar 2(DE)**
Erfinder: **Schmidt, Walter**
**Bahnhofstrasse 36**
**D-3563 Dautphetal(DE)**
Erfinder: **Geyer, Volker**
**Danziger Strasse 19**
**D-4020 Mettmann(DE)**

(74) Vertreter: **Thielmann, Paul, Dipl.-Landw.**
**Am Eschenberg 14**
**D-3560 Biedenkopf(DE)**

(54) **Bauteil einer mehrschichtigen Flachmaterial-Konstruktion insbesondere für Kraftfahrzeuge.**

(57) Die Erfindung betrifft ein Bauteil aus einer mehrschichtigen Flachmaterial-Konstruktion insbesondere für Kraftfahrzeuge, wobei mehrere vorgeformte Formteile (1, 2) aus Flachmaterial von denen wenigstens ein eine Außenfläche des Bauteils bildendes Formteil (1) aus Metallblech besteht, mittels wenigstens einer Art von Durchsetz- oder Druckfüge-Verfahren gebildeten Fügeelementen (3, 4) unlösbar miteinander verbunden sind. Die Erfindung besteht darin, daß wenigstens bei einer Art der Fügeelemente (3) diese jeweils bestehen aus zwei an einander gegenüberliegenden Rändern eines von einer H-förmigen, durch alle Formteile (1, 2) hindurchgehenden Einschnittstanzung gebildeten viereckigen Durchbruchs (31) auf einer Außenfläche des Bauteils vorgesehenen Bördelrändern (32, 33), die von den durch die H-förmige Einschnittstanzung entstandenen Materialausschnitten aller Formteile (1, 2) gebildet sind.

EP 0 383 993 A1

FIG.1

## Bauteil aus einer mehrschichtigen Flachmaterial-Konstruktion insbesondere für Kraftfahrzeuge

Die Erfindung betrifft ein Bauteil aus einer mehrschichtigen Flachmaterial-Konstruktion insbesondere für Kraftfahrzeuge, wobei mehrere vorgeformte Formteile aus Flachmaterial, von denen wenigstens ein eine Außenfläche des Bauteils bildendes Formteil aus Metallblech besteht, mittels wenigstens einer Art von in einem Durchsetz-oder Druck-Fügeverfahren gebildeten Fügeelementen unlösbar miteinander verbunden sind. Es sind bereits verschiedene Techniken bekannt, um auf "kaltem" Wege Formteile aus Flachmaterial, z.B. aus Metallblechen ohne Hinzunahme besonderer Verbindungsmittel unlösbar miteir·· der zu verbinden.

Eine dieser Techniken ist das Druckfügen, wie es z.B. in dem Sonderdruck aus der Fachzeitschrift "Stahl und Eisen", April 1986, Heft 8, beschrieben ist. Dabei werden die aufeinanderliegenden Blechteile mittels eines aus Stempel und Schneid-Spreizmatritze bestehenden Werkzeuges an der Fügestelle teilweise derart durchstoßen, daß jeweils ein Materialstreifchen an seinen Längsseiten aus den Blechen abgeschert, aus deren Ebenen herausgedrückt und unmittelbar darunter breitgestaucht wird. Die abgescherten Blechstreifen bleiben an ihren Enden mit den Blechen verbunden. Die Stauchung des durchgedrückten Materials unter den Blechen ist im wesentlichen bestimmend für die Festigkeit der Fügeelemente.

Mit dieser Druchsetz- oder Druck-Fügetechnik können nur jeweils zwei aufeinanderliegende Flachteile (Bleche) miteinander verbunden werden.

Indessen geht aus dem DE-GM 86 32 788.7 eine Durchbruch-Fügetechnik hervor, womit mehr als zwei aufeinanderliegende Flachteile, von denen innenliegende Schichten auch aus einem anderen Material als Metallblech bestehen können, verbunden werden können. Dabei weisen alle aufeinanderliegend miteinander verbundene Formteile des Bauteils an den Verbindungsstellen örtlich übereinstimmende Bohrungen auf. Die Bohrungen eines außenliegenden Formteils sind kleiner als die Bohrungen der übrigen Formteile. An dem die kleineren Bohrungen aufweisenden Formteil sind jeweils die Randzonen um die Bohrungen bis zu einem Durchmesser, der den Durchmessern der korrespondierenden Bohrungen der anderen Formteile entspricht, aus der Ebene dieses Formteils durch die Bohrungen der anderen Formteile hindurchgedrückt, so daß sie senkrecht aus der Formteilebene herausragende kragenartige Ansätze bilden. Die äußeren Ränder dieser kragenartigen Ansätze sind jeweils nach außen umgebördelt, so daß sie die Bohrungsränder der anderen Formteile übergreifen und fest aufeinanderpressen.

Diese Durchbruch-Fügetechnik bietet gegenüber der vorher beschriebenen Fügetechnik den Vorteil, daß damit mehr als zwei Schichten miteinander verbunden werden können. Diesem Vorteil steht aber der Nachteil gegenüber, daß hierbei mehrere Arbeitsgänge erforderlich sind, nämlich 1. die Durchbrüche herstellen und 2. Durchdrücken der Randzonen um die kleineren Löcher des einen außenliegenden Bauteils durch die korrespondierenden größeren Löcher der anderen Bauteile hindurch und Umbördeln der herausragenden Ränder.

Solche Fügetechniken haben in jüngerer Zeit deshalb Bedeutung erlangt, weil sie einerseits die gefügten Bauteile thermisch nicht belasten. Damit werden Materialspannungen vermieden und die Korrosionseigenschaften nicht nachteilig beeinflußt. Außerdem bringen sie noch den weiteren beachtlichen Vorteil beispielsweise gegenüber dem elektrischen Widerstands-Punktschweißen, daß mit einem Arbeitshub - bzw. in zwei Arbeitsgängen -jeweils eine Vielzahl von Verbindungen (Fügungen) hergestellt werden können.

Der Erfindung liegt die Aufgabe zugrunde, an Bauteilen der eingangs definierten Gattung die auf dem Wege der Fügetechnik hergestellten Verbindungselemente so zu gestalten, daß bei Erhaltung der Vorteile dieser Technik die Nachteile der verschiedenen Fügeelemente weitestgehend unwirksam sind. Erforderlichenfalls sollen auch mehr als zwei aufeinanderliegende Formteile aus Flachmaterial in einem Werkzeughub miteinander verbunden werden können, wobei wenigstens ein Formteil aus einem anderen Flachmaterial als Metallblech bestehen kann.

Die gestellte Aufgabe wird erfindungsgemäß dadurch gelöst, daß die Fügeelemente die Merkmale gemäß dem Kennzeichen des Anspruchs 1 aufweisen. Vervollkommnungen und alternative Lösungsvorschläge gehen aus den Ansprüchen 2 bis 8 hervor.

Die Erfindung wird im Folgenden anhand einer sie beispielsweise wiedergebenden Zeichnung näher erläutert.

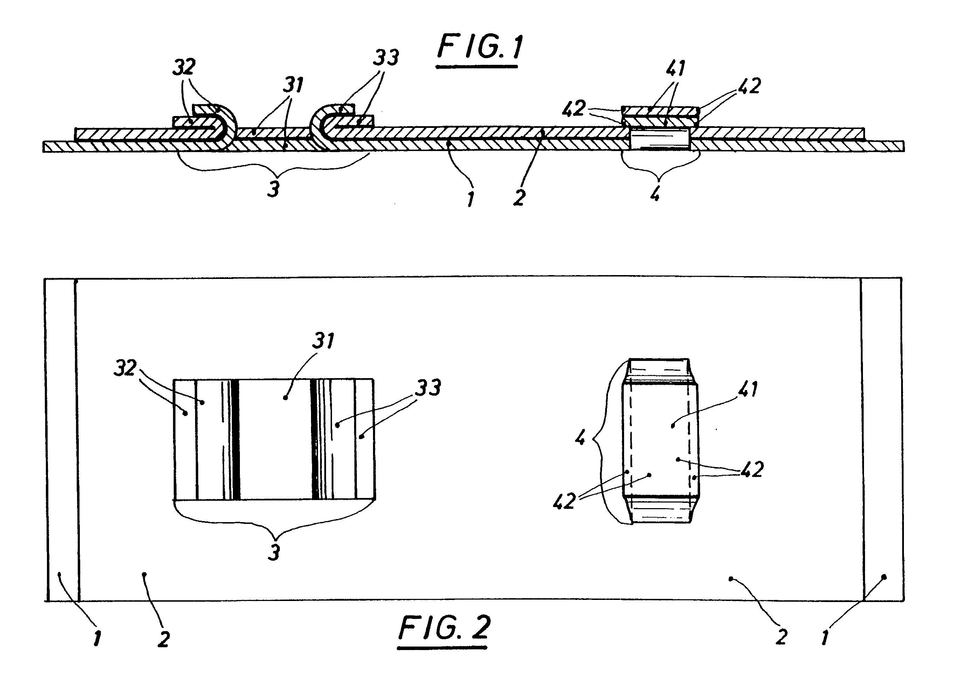

Fig. 1 stellt einen Querschnitt durch einen Ausschnitt eines Bauteils dar. Dieses besteht aus zwei Formteilen 1, 2 aus Metallblech, die durch verschiedenartige Fügeelemente unlösbar miteinander verbunden sind, nämlich eine Art von Durchbruch-Fügeelemente 3 und eine Art an sich bekannter Druck-Fügeelemente 4.

Die Durchbruch-Fügeelemente 3 bestehen jeweils aus zwei an einander gegenüberliegenden Rändern eines von einer H-förmigen, durch beide Formteile 1, 2 hindurchgehenden Einschnittstanzung gebildeten viereckigen Durchbruches 31 auf eine Außenfläche des Bauteils gepreßten Bördelrändern 32, 33, die durch Umbiegen der mit dem H-förmigen Einschnitt aus den Formteilen 1, 2 teilweise abgelösten Materialanschnitten gebildet sind.

Die Druck-Fügeelemente 4 bestehen jeweils aus einem kurzen Streifchen 41 aus aufeinanderliegenden Flächen beider Formteile 1, 2, die durch die Formteilflächen hindurchgedrückt und rückseitig durch eine Breitstauchung 42 verankert sind.

Fig. 2 zeigt den gleichen Bauteil-Ausschnitt in Draufsicht.

Diese beiden Arten von Fügeelementen haben den großen Vorteil, daß sie gemeinsam in nur einem Werkzeughub hergestellt werden können. Ihre Kombination an einem Bauteil hat den Vorteil, daß sie in ihren positiven Wirkungsmerkmalen einander ergänzen und die negativen Wirkungsmerkmale abgeschwächt werden: Die Durchbruch-Fügeelemente 3 haben den Vorteil, daß sie eine sehr hohe Zugbelastbarkeit senkrecht aus der Verbindungsebene heraus haben und die diesbezügliche Schwäche der Druck-Fügeelemente 4 aufheben.

Andererseits können die Nachteile der Durchbruch-Fügeelemente 3, nämlich daß sie die Biegesteifigkeit des Bauteils in ihrem Bereich mindern, durch die Kombination mit Druck-Fügeelementen 4 auf ein Mindestmaß eingeschränkt werden. Es ist eine Frage an den Bauteil-Konstrukteur, an welchen Stellen des Bauteils Durchbruch-Fügeelemente 3 gem. Anspruch 1 einzusetzen sind und wo die an sich bekannten Druck-Fügeelemente 4 eingesetzt werden können.

Fig. 3 stellt einen Querschnitt durch einen Ausschnitt eines aus drei Flachmaterial-Formteilen zusammengesetzten Bauteils dar.

Fig. 4 zeigt den Ausschnitt a) der Fig. 3 in Draufsicht.

An diesem Ausführungsbeispiel sind die drei Formteile 5, 6, 7 durch eine weitere ebenfalls an sich bekannte Art von Durchbruch-Fügeelementen 8 unlösbar miteinander verbunden. Dabei haben alle Formteile 5, 6, 7 jeweils im Bereich der Durchbruch-Fügeelemente 8 örtlich übereinstimmende Durchbrüche in Form von runden Löchern 51, 61, 71. Die Löcher 51 eines außenliegenden Formteils aus Metallblech sind kleiner, als die korrespondierenden Löcher 61, 71 in den beiden anderen Formteilen 6,7.

An dem die kleineren Löcher 51 aufweisenden außenliegenden Formteil 5 sind die Randzonen um die Löcher 51 aus der Ebene des Formteils 5 durch die Löcher 61, 71 der anderen beiden Formteile 6, 7 hindurchgedrückt, so daß sie jeweils einen aus den Löchern 71 des anderen außenliegenden Formteils 7 herausragenden Kragen 52 bilden, der nach außen umgebördelt ist. Damit sind die drei Formteile 5, 6, 7 fest zusammengepreßt und unlösbar miteinander verbunden.

Diese Art von Fügeelementen 8 hat zwar den Nachteil, daß sie nicht mit nur einem Werkzeughub hergestellt werden können, wie die beiden vorbeschriebenen Arten von Fügeelementen 3, 4. Jedoch sind die damit hergestellten Formteilverbindungen sehr fest und zwar nicht nur hinsichtlich einer Zugbeanspruchung senkrecht aus der Verbindungsebene heraus, sondern auch im Hinblick auf die Schwerkraft.

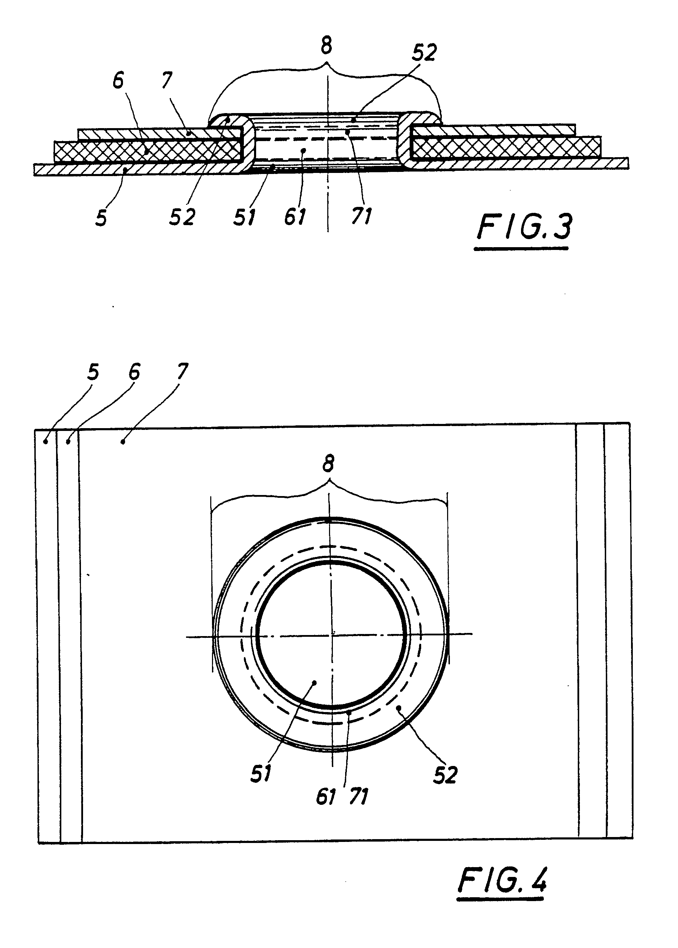

Diese Durchbruch-Fügeelemente 8 gem. Anspruch 3 (Fig.3 und 4) haben auch - ebenso wie die Durchbruch-Fügeelemente 3 gem. Anspruch 1 (Fig. 1 und 2) - den Vorteil, daß mehr als zwei Formteile miteinander verbunden werden können, von denen nur ein Formteil aus formbarem Metallblech bestehen muß. Wenigstens ein anderes Formteil kann aus einem anderen, nicht kalt formbaren Werkstoff bestehen, der schwingungsdämmende, wärmedämmende und durchschlagsichernde Eigenschaften hat.

## Ansprüche

1. Bauteil aus einer mehrschichtigen Flachmaterial-Konstruktion insbesondere für Kraftfahrzeuge, wobei mehrere vorgeformte Formteile aus Flachmaterial, von denen wenigstens ein eine Außenfläche des Bauteils bildendes Formteil aus Metallblech besteht, mittels wenigstens einer Art von Durchsetz- oder Druckfüge-Verfahren gebildeten Fügeelementen unlösbar miteinander verbunden sind,
**dadurch gekennzeichnet,**
daß wenigstens bei einer Art der Fügeelemente (3) diese jeweils bestehen aus zwei an einander gegenüberliegenden Rändern eines von einer H-förmigen, durch alle Formteile (1, 2) hindurchgehenden Einschnittstanzung gebildeten viereckigen Durchbruchs (31) auf einer Außenfläche des Bauteils vorgesehenen Bördelrändern (32, 33), die von den durch die H-förmige Einschnittstanzung entstandenen Materialanschnitten aller Formteile (1, 2) gebildet sind.

2. Bauteil aus einer zweischichtigen Flachmetall-Konstruktion nach Anspruch 1,
**dadurch gekennzeichnet,**
daß die Fügeelemente dieser Art kombiniert sind mit Druck-Fügeelementen einer anderen Art, wobei die Fügeelemente (4) aus je einem kurzen Streifchen (41) aus aufeinanderliegenden Flächen von zwei Formteilen (1, 2) besteht, die durch die Formteilflächen hindurchgedrückt und rückseitig durch eine gemeinsame Breitstauchung (42) verankert sind.

3. Bauteil nach einem der Ansprüche 1 oder 2, **gekennzeichnet durch** die Kombination wenigstens einer dieser Arten von Fügeelementen (3, 4) mit einer anderen Art von Durchbruch-Fügeelementen, wobei jeweils

a) alle flächig aufeinanderliegenden Formteile (5, 6, 7) im Bereich eines Durchbruch-Fügeelementes (8) örtlich übereinstimmende Durchbrüche in Form von runden Löchern (51, 61, 71) haben,

b) das Loch (51) eines außenliegenden Formteils (5) aus Metallblech kleiner ist, als die Löcher (61, 71) der anderen Formteile (6, 7) und wobei

c) die Randzone um das kleinere Loch (51) aus der Ebene des außenliegenden Formteils (5) durch die Löcher (61, 71) der anderen Formteile (6, 7) hindurchgedrückt ist und einen aus dem Loch (71) des anderen außenliegenden Formteils (7) herausragenden Kragen (52) bildet, der nach außen umgebördelt ist.

4. Bauteil nach einem der Ansprüche 1 oder 3,
**dadurch gekennzeichnet,**
daß wenigstens eines der mit einem Formteil (5) aus Metallblech verbundenen Formteile (6, 7) aus einem anderen, nicht kalt verformbaren Werkstoff besteht.

5. Bauteil nach einem der Ansprüche 1, 3 oder 4,
**dadurch gekennzeichnet,**
daß eines der mit einem Formteil (5) aus Metallblech verbundenen Formteile (6, 7) aus einem wärmedämmenden Werkstoff besteht.

6. Bauteil nach einem der Ansprüche 1, 3 oder 4,
**dadurch gekennzeichnet,**
daß eines der mit einem Formteil (5) aus Metallblech verbundenen Formteile (6, 7) aus einem durchschlagfesten Werkstoff besteht.

7. Bauteil nach einem der Ansprüche 1, 3 oder 4,
**dadurch gekennzeichnet,**
daß eines der mit einem Formteil (5) aus Metallblech verbundenen Formteile (6, 7) aus einem schwingungsdämmenden Werkstoff besteht.

8. Bauteil nach einem der Ansprüche 1 bis 7,
**dadurch gekennzeichnet,**
daß wenigstens zwei Formteile des Bauteils zusätzlich durch Verklebung unlösbar miteinander verbunden sind.

## FIG.1

## FIG.2

EP 0 383 993 A1

EP 0 383 993 A1

_FIG.3_

_FIG.4_

Europäisches Patentamt

**EUROPÄISCHER RECHERCHENBERICHT**

Nummer der Anmeldung

EP 89 11 1901

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C- 918 025 (NOLD)<br>* Seite 1, Zeilen 28-38; Anspruch 1;<br>Abb. 1 * | 1 | F 16 B 5/00<br>B 21 D 39/03 |
| A | --- | 2,3 | |
| A | GB-A-2 123 734 (BTM CORP.)<br>* Seite 3, Zeilen 91-114; Figuren 13,14<br>* | 2,3 | |
| D,A | FACHZEITSCHRIFT "STAHL UND EISEN", Band 106, Nr. 8, 21. April 1986, Seiten 363-370, Düsseldorf, DE; H.P. LIEBIG et al.: "Über die Eignung höherfester Stahlbleche zum Druckfügen"<br>* Seite 363, rechte Spalte, zweiter Absatz; Abbildungen 1,5 * | 2,3 | |
| D,A | DE-U-8 632 788 (LAHNWERK GmbH & CO. KG VERFORMUNGSTECHNIK)<br>* Seite 8, Zeile 2 - Ende; Figuren 1,2<br>* | 3,7 | |
| | | | **RECHERCHIERTE SACHGEBIETE (Int. Cl.5)** |
| P,A | DE-A-3 737 210 (RALK)<br>* Spalte 1, Zeilen 40-48; einzige Figur<br>* | 8 | F 16 B<br>B 21 D |

Der vorliegende Recherchenbericht wurde für alle Patentansprüche erstellt

| Recherchenort | Abschlußdatum der Recherche | Prüfer |
|---|---|---|
| DEN HAAG | 30-05-1990 | CALAMIDA G. |